# FASCICULE DE BREVET EUROPEEN

(11) **EP 2 799 282 B1**
(45) Date de publication et mention de la délivrance du brevet: **06.04.2016**
(21) Numéro de dépôt: 14165320.4
(22) Date de dépôt: 18.04.2014
(51) Int. Cl.: B60P 1/64

(54) **Ensemble pour la manutention de conteneurs facilitant la manipulation de verrous tournants.**
Förderanlage für Behälter, die die Handhabung von Drehsicherungen erleichtert
Assembly for the handling of containers facilitating the handling of twist locks

(30) Priorité: 19.04.2013 FR 1353560
(43) Date de publication de la demande: 05.11.2014
(73) Titulaire: Riquier, Christophe, 13015 Marseille (FR)
(72) Inventeur: Riquier, Christophe, 13015 Marseille (FR)
(74) Mandataire: Roman, Alexis

(56) Documents cités:
- EP-A2- 2 113 413
- DE-A1- 10 145 432
- FR-A1- 2 919 542
- FR-A1- 2 931 464

## Description

### Domaine technique de l'invention.

La présente invention a pour objet un ensemble pour la manutention de conteneurs dont la conception facilite la manipulation de verrous tournants. Elle a également pour objet un procédé pour embarquer un conteneur sur un bateau en utilisant cet ensemble. Elle a encore pour objet un procédé pour débarquer un conteneur rangé dans un bateau en utilisant cet ensemble.

L'invention se rapporte d'une manière générale à la manutention portuaire des marchandises conditionnées dans des conteneurs standardisés destinés à être transportés par bateau.

### État de la technique.

L'expédition des marchandises par voie maritime s'effectue aujourd'hui essentiellement au moyen de conteneurs standardisés dont les deux modèles les plus utilisés ont respectivement une longueur de 20 et 40 pieds. Des conteneurs de 45 pieds peuvent également être utilisés.

Pour le transport maritime, les conteneurs sont en général disposés empilés sur un bateau. Ces conteneurs se présentent sous la forme de grandes caisses de forme parallélépipédique comportant une paroi supérieure, une paroi inférieure et des parois latérales. Des éléments creux inférieurs pour la mise en place de verrous tournants étant situés au moins au niveau des angles de la paroi inférieure. En pratique, chacun des huit angles où se rejoignent les arêtes horizontales et verticales des parois, présente un élément creux. Ce dernier a une forme sensiblement cubique dont la surface supérieure ou inférieure est pourvue d'une ouverture oblongue. De manière à rendre solidaires les conteneurs entre eux lorsqu'ils sont superposés sur le bateau, des verrous tournants sont disposés dans les éléments creux des conteneurs. Ces éléments creux et verrous sont par exemple détaillés sur les figures 1 à 3 du document brevet FR 2.931.464 (RIQUIER).

Une fois les conteneurs disposés les uns sur les autres, les verrous tournants les maintiennent accolés. À l'heure actuelle, les verrous tournants sont mis en place par les opérateurs sous le plancher des conteneurs avant leur embarquement. Pour pouvoir effectuer cette opération, le conteneur est maintenu par un dispositif de manutention, à hauteur d'homme, au-dessus du sol.

On connait notamment les dispositifs de manutention du type grues, pont transbordeur comme décrit dans le document DE 10313248 (NOELL CRANE SYSTEMS GmbH), chariots élévateurs, chariot cavalier, etc. Cette opération présente des risques réels pour ceux qui sont chargés de la fixation des verrous tournants. En effet, le conteneur n'est pas immobilisé et peut bouger sous l'effet du vent ou d'une manoeuvre malencontreuse du pilote de l'engin de manutention, ce qui peut causer des blessures plus ou moins graves. En outre, en cas de vent violent, les opérations de manutention sont généralement interrompues de manière à ne pas mettre en péril les opérateurs. Afin de garantir que les conteneurs n'ont pas été ouverts, un scellé en plomb est disposé sur la porte après fermeture. Ce scellé en plomb présente un numéro d'identification propre qu'il convient de relever au cours des opérations de manutention. Les conteneurs doivent alors être déposés sur le sol dans un lieu sécurisé le temps que les relevés soient effectués.

On connait par le document brevet FR 2.931.464 (RIQUIER), un ensemble pour la manutention de conteneurs comprenant une structure abri comportant un toit sur lequel sont destinés à être positionnés un ou plusieurs conteneurs, ledit toit comportant des découpes configurées pour permettre l'accès aux éléments creux inférieurs dudit ou desdits conteneurs de manière à pouvoir placer les verrous tournants depuis l'intérieur de ladite structure abri et vérifier les scellés. Ce type de structure assure la sécurité des opérateurs quelles que soient les conditions météorologiques. En outre, le temps de manutention des conteneurs est optimisé en regroupant les opérations de mise en place des verrous tournants et de vérification des scellés. Bien qu'efficace, la structure abri décrite dans le document brevet FR 2.931.464 (RIQUIER) est relativement complexe à réaliser.

Le document brevet FR 2.919.542 (GAUSSIN) concerne un autre ensemble motorisé pour la manutention conforme au préambule de la revendication principale. Dans le cas où les portes des conteneurs sont équipées de scellés numérotés, le contrôle de ces derniers est particulièrement contraignant pour l'opérateur. En effet, cet opérateur est obligé de grimper sur la structure support, sans aucune sécurité, et devant s'adapter à cette situation particulièrement inconfortable.

Face à cet état des choses, un objectif de l'invention est de simplifier la conception de la structure support sur laquelle reposent les conteneurs.

Un autre objectif de l'invention est de proposer une structure support permettant de diminuer davantage le temps de manutention des conteneurs.

Encore un autre objectif de l'invention est de proposer une structure support permettant de sécuriser davantage l'intervention des opérateurs et/ou des intervenants en cas de contrôle des scellés des conteneurs.

### Divulgation de l'invention.

La solution proposée par l'invention est un ensemble pour la manutention de conteneurs comportant :
- au moins un conteneur de forme parallélépipédique comportant une paroi supérieure, une paroi inférieure et des parois latérales, des éléments creux inférieurs pour la mise en place de verrous tournants étant situés au niveau des angles de la paroi inférieure,
- un engin motorisé pour déplacer ledit conteneur, ledit engin comportant :
   ∘ un châssis pourvu de roues,
   ∘ une structure support pourvue d'une plateforme sur laquelle est positionné le conteneur, ladite plateforme comportant des bords longitudinaux et des bords transversaux,
   ∘ la plateforme comporte des évidements permettant l'accès aux éléments creux inférieurs du conteneur disposé sur ladite plateforme, de manière à ce qu'un opérateur puisse enlever ou mettre en place les verrous tournants dans lesdits éléments creux,
- la plateforme est située à une hauteur telle qu'un individu puisse enlever ou mettre en place les verrous tournants dans les éléments creux inférieurs depuis le sol. En outre, la plateforme comporte des évidements se présentant sous la forme d'échancrures réalisées sur les bords longitudinaux de ladite plateforme, de sorte que lesdits bords longitudinaux présentent alternativement des parties pleines sur lesquelles repose le conteneur et des parties creuses formées par lesdites échancrures et autorisant l'accès, depuis le sol, aux éléments creux inférieurs dudit conteneur, lesquelles échancrures sont dimensionnées de manière à permettre le passage d'un opérateur.

Cet ensemble est remarquable en ce que :
- au moins une paroi latérale du conteneur est formée par des portes articulées, lesquelles portes sont équipées d'un scellé numéroté à usage unique empêchant l'ouverture desdites portes,
- chaque échancrure est associée à un escalier débouchant sur la plateforme, de sorte qu'en montant sur lesdits escaliers, un opérateur puisse accéder et contrôler le scellé.

La configuration de la structure support est ainsi plus simple à réaliser que celle décrite dans le document brevet FR 2.931.464 précité. De plus, le déplacement des opérateurs autour de la structure support est plus aisé, rendant l'enlèvement ou la mise en place des verrous tournants plus aisée, et donc plus rapide. En outre, l'accès aux scellés maintenant aisé, ce qui permet de faciliter, de sécuriser et de rendre plus rapide leur contrôle.

D'autres caractéristiques avantageuses de l'invention sont listées dans les revendications secondaires. Chacune de ces caractéristiques peut être considérée seule ou en combinaison avec les caractéristiques remarquables définies ci-dessus.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique de dessus d'un engin motorisé conforme à l'invention,
- la figure 2 est une vue schématique de côté de l'engin de la figure 1,
- la figure 3 est une vue schématique de dessus montrant l'engin de la figure 1 sur lequel est installé un conteneur de 20 pieds,
- la figure 4 est une vue schématique de côté de l'ensemble selon la figure 3,
- la figure 5 est une vue schématique de dessus montrant l'engin de la figure 1 sur lequel est installé deux conteneurs de 20 pieds disposés côte-à-côte,
- la figure 6 est une vue schématique de côté de l'ensemble selon la figure 5,
- la figure 7 est une vue schématique de dessus montrant l'engin de la figure 1 sur lequel est installé un conteneur de 40 pieds,
- la figure 8 est une vue schématique de côté de l'ensemble selon la figure 7,
- la figure 9 est une vue schématique de dessus montrant l'engin de la figure 1 sur lequel est installé un conteneur de 45 pieds,
- la figure 10 est une vue schématique de côté de l'ensemble selon la figure 9,
- la figure 11 est une vue schématique en coupe transversal d'un engin motorisé conforme à l'invention est sur lequel est installé un conteneur.

### Modes de réalisation de l'invention.

L'objet de l'invention permet de faciliter la mise en place ou l'enlèvement des verrous tournants destinés à rendre solidaires des conteneurs superposés embarqués sur un navire. Par mesure de simplification, on parlera dans la suite de la description uniquement de la mise en place des verrous tournants. Cependant, ce qui est valable pour la mise en place des verrous tournants est transposable aux opérations d'enlèvement desdits verrous tournants.

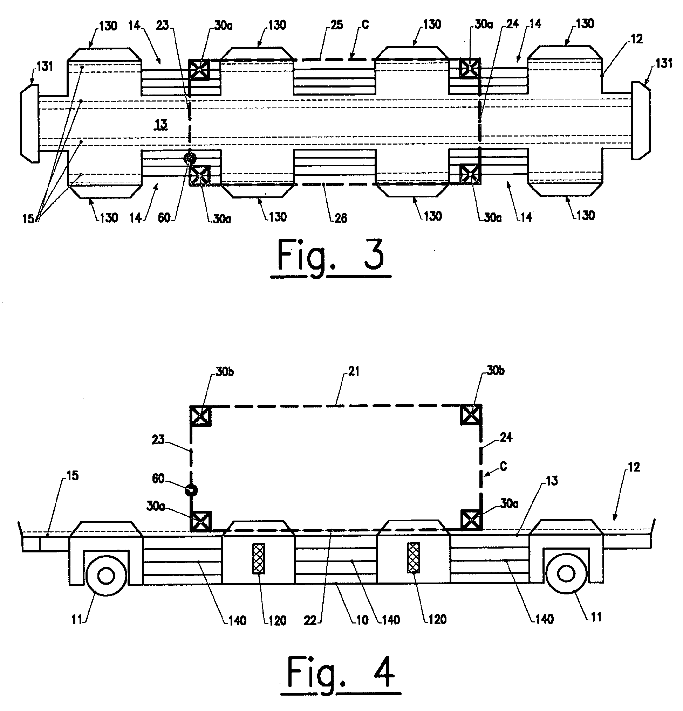

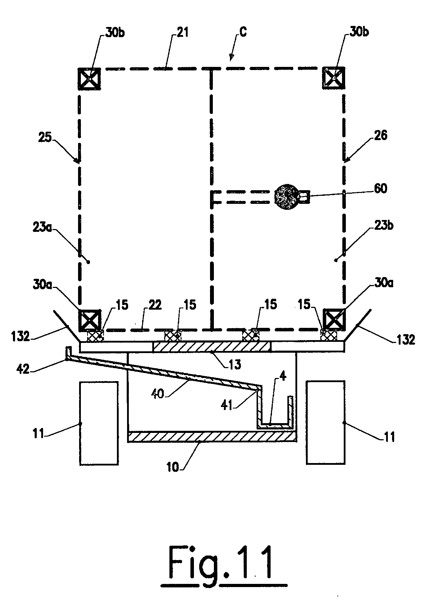

En se rapportant par exemple aux figures 3 et 4, un conteneur C se présente sous la forme de grandes caisses de forme parallélépipédique comportant six parois : une paroi supérieure 21, une paroi inférieure 22, et des parois latérales. Ces parois latérales se composent : d'une paroi avant 23 comportant des portes articulées 23a, 23b (figure 11), une paroi arrière 24 opposée à ladite paroi avant, et deux parois latérales 25, 26 perpendiculaires aux parois avant et arrière. Sur chacune de ces parois est généralement marqué un numéro d'identification du conteneur.

Des éléments creux 30a, 30b sont disposés à chacun des huit angles du parallélépipède formant le conteneur C. Plus particulièrement, quatre éléments creux inférieurs 30a sont situés au niveau des angles de la paroi inférieure 22 et quatre éléments creux supérieurs 30b sont situés au niveau des angles de la paroi supérieure 21.

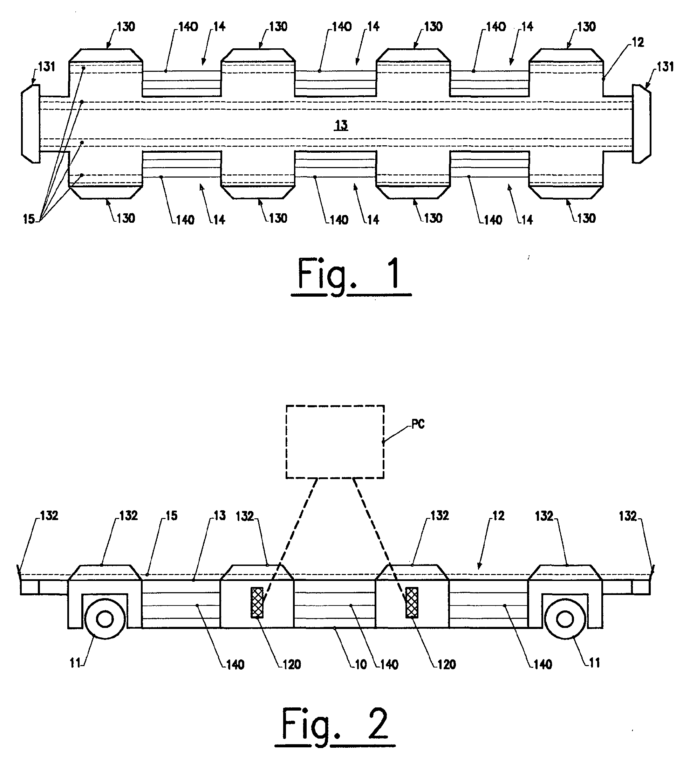

Chaque élément creux 30a, 30b, représenté en détail sur la figure 2 du document brevet FR 2.931.464 précité et auquel l'homme du métier pourra se reporter, a généralement une forme sensiblement cubique dont la surface supérieure ou inférieure est pourvue d'une ouverture oblongue. Des verrous tournants, schématisés sur la figure 3 du document brevet FR 2.931.464, sont destinés à être placés dans les quatre éléments creux inférieurs 30a situés au niveau des angles de la paroi inférieure 22 du conteneur C, laquelle paroi est destinée à être disposée au-dessus de la paroi supérieure d'un autre conteneur. Ces verrous tournants sont en général placés par un opérateur. Ils comportent un corps sur lequel est montée mobile en rotation une partie haute liée à une partie basse. Ces verrous tournants peuvent être verrouillés manuellement par action sur un levier ou un câble, ou par rotation automatique d'un quart de tour de la partie basse par rapport au corps au moyen d'un ressort.

Afin de garantir que le conteneur C n'a pas été ouvert, les portes 23a, 23b sont équipées d'au moins un scellé numéroté à usage unique 60 empêchant l'ouverture desdites portes. En pratique, seule la porte droite 23b est pourvue de scellé officiel 60. Mais la porte gauche 23a peut également comporter un scellé, qui n'est généralement pas officiel. Un numéro d'identification unique est marqué sur ce scellé 60. Lors de la manutention des conteneurs C, l'opérateur procède à une vérification des scellés 60, laquelle vérification comprend les phases suivantes : - un relevé du numéro d'identification du conteneur C - un relevé du numéro d'identification des scellés 60, - une vérification de la non-détérioration des scellés 60.

Au cours des opérations de manutention, les conteneurs sont déplacés par différents engins de manutention tels que des grues, des portiques, des chariots élévateurs à bras télescopique, des chariots cavaliers, etc. Suivant le système d'accroche équipant ces engins, ceux-ci peuvent déplacer : - soit un conteneur de 20 pieds seul, - soit un conteneur de 40 pieds seul, - soit simultanément deux conteneurs de 20 pieds disposés l'un derrière l'autre, la paroi arrière du premier conteneur étant disposée en vis-à-vis de la paroi avant du second conteneur, - soit un conteneur de 45 pieds.

Pour faciliter leur manutention, les conteneurs sont placés sur un engin motorisé illustré sur les figures 1, 2 et 11. Cet engin comprend un châssis 10 pourvu de roues 11 et une structure support 12 pourvue d'une plateforme 13 sur laquelle est positionné le conteneur C. Cette plateforme 13 comporte des bords longitudinaux 130 et des bords transversaux 131.

L'entraînement des roues 11 est assuré par un moteur (électrique, thermique, hydraulique...). Afin de réduire l'encombrement de l'engin, ce moteur est préférentiellement installé entre le châssis 10 et la plateforme 13. Les roues 11 peuvent être directionnelles de manière à ce que l'engin puisse braquer et/ou se déplacer en ligne droite et/ou sur les côtés.

Dans le but d'automatiser le déplacement de l'engin, on utilise préférentiellement un moteur piloté depuis un centre de commande PC distant (par exemple installé dans un bâtiment) ou installé directement dans ledit engin. Ce dernier intègre typiquement un ordinateur pourvu d'un processeur, contrôleur, applications informatiques, programmes ou de tous autres moyens électroniques équivalents permettant de gérer les différentes fonctionnalités décrites ci-après. Comme illustré sur la figure 2, la structure support 12 est pourvue de capteurs 120 permettant de situer l'engin motorisé dans son environnement, lesdits capteurs étant configurés pour communiquer avec le centre de commande PC, préférentiellement par onde radio ou wifi. Il est ainsi possible de commander automatiquement l'engin de manière à ce qu'il reste aligné avec un portique (ou un autre appareil de manutention) lorsque ce dernier se déplace le long d'un navire au fur et à mesure du chargement et/ou déchargement. On peut utiliser des radars ou GPS permettant de localiser avec précision l'engin et/ou utiliser des capteurs/réfléchisseurs interagissant avec des capteurs/réfléchisseurs installés sur le portique et sur l'appareil de manutention. Sur les figures annexées, les capteurs 120 sont disposés sur les flancs de la structure support 12. Selon le type de capteur utilisé, tout autre emplacement convenant à l'homme du métier peut bien évidemment être envisagé. Le centre de commande PC commande le déplacement d'un seul engin, ou de plusieurs engins simultanément.

La structure support 12 peut également intégrer des moyens de signalisation visuelle permettant de donner des indications aux appareils de manutention sur la possibilité ou pas d'effectuer l'opération de manutention. Par exemple, ces moyens de signalisation peuvent être du type feu rouge, feu vert, ou encore permettre l'affichage en temps réel du numéro d'identification de l'engin de manutention autorisé à effectuer les opérations de manutention.

La structure support 12 peut en outre intégrer des moyens de protection contre les chocs, et notamment des pare-chocs (non représentés) disposés à l'avant et à l'arrière de ladite structure. Ces pare-chocs seront notamment efficaces en cas de choc avec un chariot cavalier, lorsque que ce dernier manipule les conteneurs C.

Le châssis 10 et la structure support 12 peuvent être deux éléments indépendants disposés l'un au dessus de l'autre, ou bien consister en un même et unique élément. Dans ce dernier cas, la structure support 12 se matérialise par la face supérieure du châssis 10. Préférentiellement, le châssis 10 et la structure support 12 sont constitués d'ossatures mécano-soudées ou réalisés au moyen d'éléments métalliques ou composites (poutres, plaques, planchers...) assemblés les uns aux autres par vissage, rivetage, soudage, collage ou autre. La plateforme 13 peut également être mécano-soudée ou bien consister en une plaque métallique, ou en matériau composite, solidaire de la structure support 12.

La structure support 12, et de manière générale l'engin, a une largeur inférieure à la distance séparant les jambes d'un chariot cavalier pour autoriser le passage desdites jambes de part et d'autre de ladite structure lorsque ledit chariot cavalier dépose ou prend des conteneurs sur la plateforme 13. En pratique, la largeur de la structure support 12 (et de l'engin) sera sensiblement la même que celle des conteneurs C qu'elle supporte, c'est-à-dire environ 2,5 m. Sa longueur est d'environ 12 m - 12,5 m.

La plateforme 13 est située à une hauteur telle qu'un opérateur puisse, depuis le sol, enlever ou mettre en place les verrous tournants dans les éléments creux inférieurs 30a situés au niveau de la paroi inférieure 22 du conteneur C. Par exemple, la plateforme 13 est située à une hauteur comprise entre 1 m et 1,8 m par rapport au sol, avantageusement à 1,5 m, préférentiellement à 1,4 m.

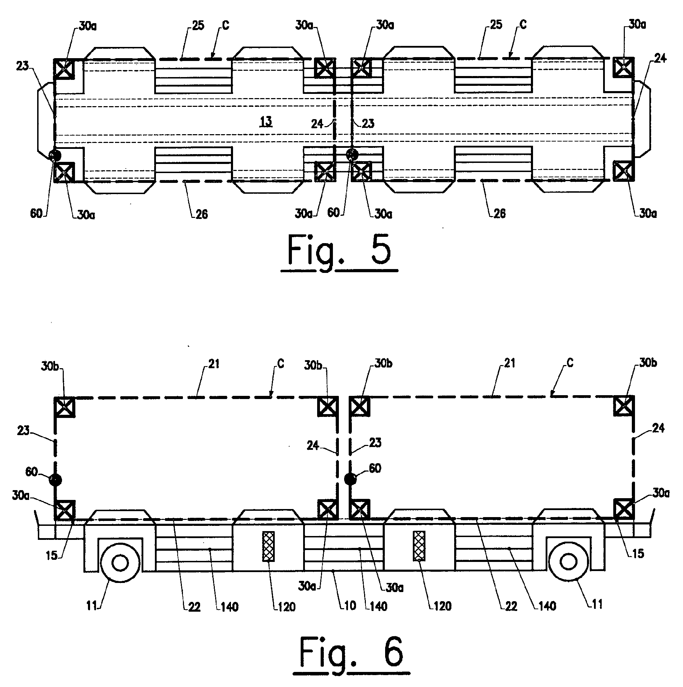

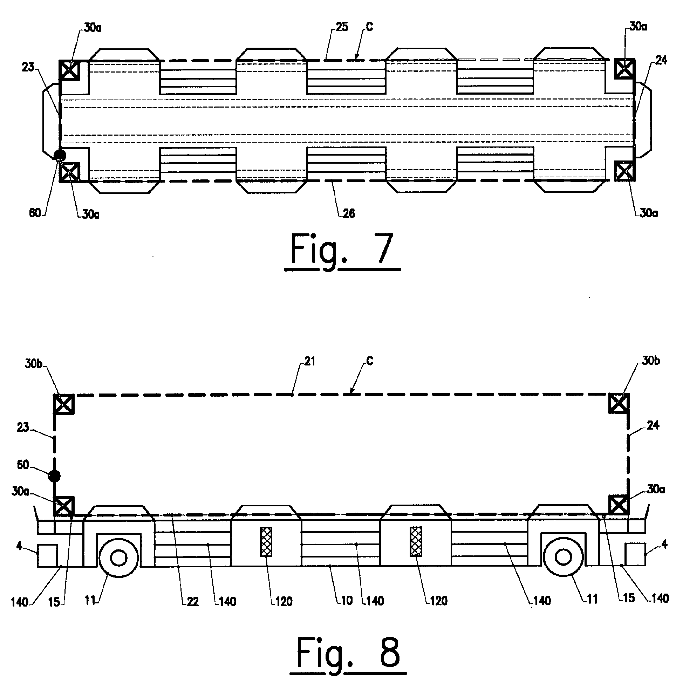

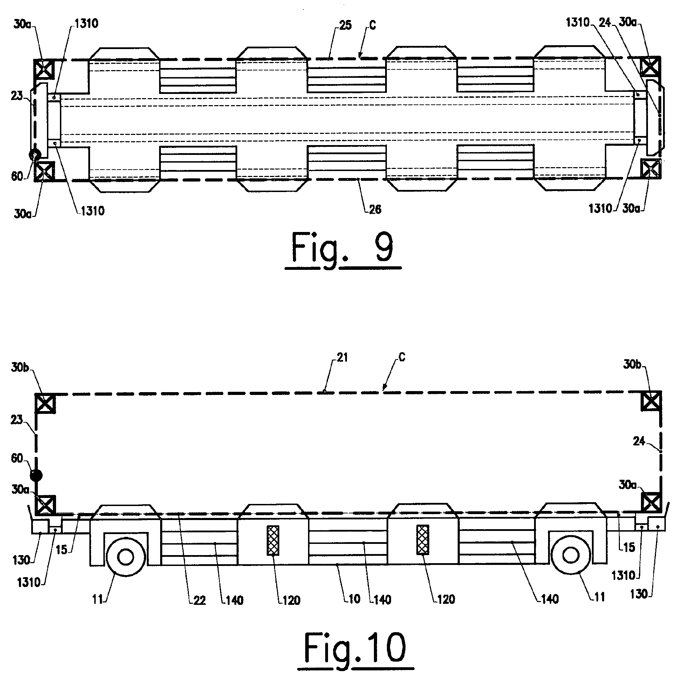

La plateforme 13 est configurée de manière à délimiter : - un emplacement pour recevoir un unique conteneur de 20 pieds (figures 3 et 4), - un emplacement pour recevoir deux conteneurs de 20 pieds accolés (figures 5 et 6), - un emplacement pour recevoir un unique conteneur de 40 pieds (figures 7 et 8), - un emplacement pour recevoir un unique conteneur de 45 pieds (figures 9 et 10). Ces différents emplacements peuvent être définis par des capteurs ou des repères visuels du type traces de peinture ou éléments rapportés disposés sur la plateforme 13. Lorsqu'un conteneur de 20 pieds est déposé seul sur la plateforme 13, celui-ci est préférentiellement disposé au milieu de ladite plateforme. Lorsque deux conteneurs de 20 pieds sont déposés sur la plateforme 13, ils sont chacun disposés d'un côté de la plateforme, leurs parois qui se font face étant situées sensiblement au milieu de ladite plateforme, un espace compris entre environ 5 cm et environ 1 m séparant ces parois. Lorsqu'un conteneur de 40 ou 45 pieds est déposé seul sur la plateforme 13, celui-ci est disposé de manière à ce que ses parois avant 23 et arrière 24 soient situées au niveau des bords transversaux 131.

Afin de faciliter la dépose du ou des conteneurs, des guides 132 sont disposés aux extrémités des parties pleines des bords longitudinaux 130 de la plateforme 13 et sur les bords transversaux 131 de ladite plateforme. Ces guides 132 ont pour fonction de guider les conteneurs C durant la phase de dépose sur la plateforme 13 et contenir les mouvements latéraux et longitudinaux desdits conteneurs. Ces guides 132 ont une géométrie évasée vers l'extérieur à la manière d'un entonnoir. Ils peuvent se présenter sous la forme de plaques directement intégrées ou rapportées sur la plateforme 13.

Les conteneurs de 45 pieds n'étant pas couramment utilisés, il n'est pas utile que la structure support 12 soit en permanence dimensionnée pour recevoir ce type de conteneur. Ainsi, il est avantageux que les bords transversaux 131 de la plateforme 13 soient montés coulissants dans ladite plateforme, entre une position repliée (figures 3 à 8) où ils délimitent l'emplacement pour recevoir deux conteneurs de 20 pieds accolés ou l'emplacement pour recevoir un unique conteneur de 40 pieds, et une position déployée (figures 9 et 10) où ils délimitent l'emplacement pour recevoir un unique conteneur de 45 pieds. Les bords transversaux 131 sont par exemple pourvus de fourches 1310 montés coulissantes dans des glissières agencées sur la structure support 12. Le passage de la position repliée à la position déployée peut être effectué manuellement ou automatiquement en motorisant les bords transversaux 131. Dans la position déployée, la longueur de la structure support 12 atteint environ 14 m.

La plateforme 13 comporte des évidements 14 permettant l'accès aux éléments creux inférieurs 30a du conteneur C disposé sur ladite plateforme, de manière à ce qu'un opérateur puisse enlever ou mettre en place les verrous tournants dans lesdits éléments creux. Conformément à l'invention, et comme cela apparait sur la figure 1, ces évidements 14 se présentent sous la forme d'échancrures réalisées sur les bords longitudinaux 130 de la plateforme 13. Ainsi, chaque bord longitudinal 130 présente alternativement des parties pleines sur lesquelles repose le conteneur C et des parties creuses formées par les échancrures 14. Ces dernières autorisent l'accès, depuis le sol, aux éléments creux inférieurs 30a, lesquelles échancrures sont dimensionnées de manière à permettre le passage d'un opérateur. Depuis le sol, il suffit à ce dernier de se glisser dans une des échancrures 14 pour avoir facilement accès aux éléments creux inférieurs 30a. De manière avantageuse, les échancrures 14 ont une largeur comprise entre 1 m et 2,5 m, préférentiellement 2 m et une profondeur comprise entre 50 cm et 1 m, préférentiellement 75 cm.

Sur les figures annexées, les échancrures 14 sont de forme rectangulaire, mais d'autres formes peuvent êtres envisagées : carrée, oblongue, triangulaire, etc. Elles peuvent être obtenues soit en enlevant (par exemple par découpe) à la plateforme 13 de la matière au niveau des parties creuses, soit en rajoutant (par exemple par soudage et/ ou boulonnage) à ladite plateforme des plaques formant les parties pleines.

Sur les figures annexées, trois échancrures 14 sont disposées de chaque côté de la plateforme 13, l'échancrure centrale étant plus longue que les échancrures latérales. Cette configuration suffit à autoriser l'accès aux éléments creux inférieurs 30a du ou des conteneurs C positionnés dans les différents emplacements précités. En d'autres termes, si la plateforme 13 supporte un unique conteneur de 20 pieds, deux conteneurs de 20 pieds accolés, un unique conteneur de 40 pieds, ou un unique conteneur de 45 pieds, les éléments creux inférieurs 30a seront systématiquement positionnés dans une des échancrures 14. Un nombre supérieur d'échancrures 14 positionnées de manière adéquate pour obtenir le même résultat peut toutefois être envisagé.

Comme illustré sur les figures 8 et 11, l'engin motorisé peut être équipé d'un caisson 4 pour la récupération des verrous tournants. Ce caisson 4 permet à l'opérateur de regrouper les différents verrous tournants sans qu'ils trainent sur le sol. Sur la figure 8, le caisson 4 est installé en dessous de la plateforme 13, aux extrémités transversales de l'engin. Sur la figure 11, le caisson 4 est installé en dessous de la plateforme 13, d'un côté de l'engin (par exemple à droite ou à gauche). Le caisson 4 peut par exemple être fixé sur le châssis 10 ou sur une partie de la structure support 12 et peut se présenter sous la forme d'une caisse en bois ou en plastique ouvert dans sa partie supérieure. Le caisson 4 étant situé d'un côté de l'engin, l'opérateur doit tout de même pouvoir y accéder lorsqu'il opère de l'autre côté. Pour ce faire, une rampe inclinée 40 est associée au caisson 4. Cette rampe 40 est agencée sous la plateforme 13. Elle présente une extrémité basse 41 située au niveau du caisson 4 et une extrémité haute 42 située de l'autre côté de l'engin, au niveau de la plateforme 13. De cette manière, lorsque l'opérateur travaille du même côté que le caisson 4, il lui suffit de retirer le verrou tournant positionné au niveau de l'élément creux inférieur 30 et de le ranger dans ledit caisson. Lorsque l'opérateur travaille de l'autre côté, il lui suffit de placer le verrou tournant au niveau de l'extrémité supérieure 42, de manière à ce que ce dernier glisse naturellement par gravité le long de la rampe 40 et tombe dans le caisson 4.

Selon une autre caractéristique avantageuse de l'invention, des éléments 15 constitués d'un matériau souple pour absorber les chocs et les vibrations sont installés sur la plateforme 13. Ces éléments 15 consistent préférentiellement en des bandes fixées sur la plateforme 13, lesquelles bandes peuvent être continues ou discontinues et réalisées en caoutchouc rigide ou autre matériau similaire, par exemple du type tampon en caoutchouc utilisé comme pare-choc sur des remorques. En pratique, la partie centrale de la plateforme 13 comprend deux bandes 15 de caoutchouc parallèles qui s'étendent sur toute la longueur de ladite plateforme. Les parties pleines disposées de part et d'autre des échancrures 14 peuvent également comporter des bandes 15 dès lors qu'un conteneur C est en appui sur ces parties. Chaque bande 15 a une largeur d'environ 25 cm et une épaisseur d'environ 15 cm. Dans une variante de réalisation, les éléments 15 peuvent consister en des ressorts fixés sur la plateforme 13, lesquels ressorts sont agencés sur la plateforme 13 pour absorber les chocs, les vibrations et le bru it.

Sur la figure 11, il apparait que le scellé 60 numéroté installé sur les portes du conteneur disposé sur la plateforme est disposé à une hauteur supérieure à celle des éléments creux inférieurs 30a. Lorsqu'un conteneur C est positionné sur la plateforme 13, les éléments creux inférieurs 30a sont positionnés à une hauteur d'environ 1,5 m par rapport au sol, tandis que le scellé 60 est positionné à une hauteur d'environ 2 m. Selon la taille de l'opérateur, il peut donc être difficile d'avoir accès au scellé 60 depuis le sol. Pour cette raison, il est avantageux que chaque échancrure 14 soit associée à un escalier 140 débouchant sur la plateforme 13. Chaque escalier 140 est par exemple constitué de deux à quatre marches. De cette façon, en montant sur les escaliers 140, un opérateur peut facilement accéder et contrôler le scellé numéroté 60. Toutefois, sur certains conteneurs, les scellés 60 sont situés au même niveau que les éléments creux inférieurs 30a.

Sur la figure 8, des escaliers supplémentaires 140 sont disposés aux extrémités transversales de la structure 12. Ces escaliers 140 peuvent comporter une seule ou plusieurs marches. Ils permettent à un intervenant d'accéder facilement aux portes du conteneur qui sont situées au niveau de ces extrémités transversales, afin de contrôler le scellé numéroté 60 qui s'y trouve.

Différentes utilisations de l'engin motorisé objet de l'invention vont maintenant être décrites. Pour embarquer un conteneur sur un bateau, il convient dans un premier temps d'enlever ce conteneur C initialement rangé dans un parc à conteneurs au moyen d'un chariot cavalier. Le chariot cavalier est ensuite positionné au dessus de l'engin motorisé de manière à ce que le conteneur C soit positionné sur la plateforme 13. Préférentiellement, le chariot cavalier maintient le conteneur C à une hauteur telle qu'il ne heurte pas la plateforme 13. En pratique, le conducteur du chariot cavalier pourra s'aider d'un repère correspondant à la hauteur adéquate, lequel repère est tracé dans l'entrejambe dudit chariot. Lorsque le conteneur C est correctement installé, les verrous tournants sont mis en place dans les éléments creux inférieurs 30a. Avant, pendant ou après cette opération, l'identification du conteneur C est avantageusement contrôlée et validée. Le conteneur C pourvu de ses verrous tournants est alors enlevé au moyen d'un portique et déposé sur le bateau.

Pour débarquer un conteneur rangé dans un bateau, on commence par enlever ce conteneur C au moyen d'un portique, puis on le dépose sur la plateforme 13 de l'engin motorisé. L'opérateur peut alors enlever les verrous tournants des éléments creux inférieurs 30a du conteneur C. Avant, pendant ou après cette étape, l'opérateur peut contrôler le scellé numéroté 60 qui empêche l'ouverture des portes 23a, 23b et valider. Le conteneur C dépourvu de ses verrous tournants est enfin enlevé au moyen d'un chariot cavalier pour être rangé dans un parc à conteneurs. On répète ces opérations en déplaçant le portique d'une cale de rangement à l'autre du bateau, l'engin motorisé étant déplacé de manière à suivre le déplacement dudit portique.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes.

## Revendications

1. Ensemble pour la manutention de conteneurs comportant :
- au moins un conteneur (C) de forme parallélépipédique comportant une paroi supérieure (21), une paroi inférieure (22) et des parois latérales (23, 24, 25, 26), des éléments creux inférieurs (30a) pour la mise en place de verrous tournants étant situés au niveau des angles de la paroi inférieure (22),
- un engin motorisé pour déplacer le conteneur (C), ledit engin comportant :
∘ un châssis (10) pourvu de roues (11),
∘ une structure support (12) pourvue d'une plateforme (13) sur laquelle est positionné le conteneur (C), ladite plateforme comportant des bords longitudinaux (130) et des bords transversaux (131),
∘ la plateforme (13) comporte des évidements (14) permettant l'accès aux éléments creux inférieurs (30a) du conteneur (C) disposé sur ladite plateforme, de manière à ce qu'un opérateur puisse enlever ou mettre en place les verrous tournants dans lesdits éléments creux,
- la plateforme (13) est située à une hauteur telle qu'un opérateur puisse enlever ou mettre en place les verrous tournants dans les éléments creux inférieurs (30a) depuis le sol,
- la plateforme (13) comporte des évidements (14) se présentant sous la forme d'échancrures réalisées sur les bords longitudinaux (130) de ladite plateforme, de sorte que lesdits bords longitudinaux présentent alternativement des parties pleines sur lesquelles repose le conteneur (C) et des parties creuses formées par lesdites échancrures et autorisant l'accès, depuis le sol, aux éléments creux inférieurs (30a) dudit conteneur, lesquelles échancrures sont dimensionnées de manière à permettre le passage d'un opérateur,
**se caractérisant par le fait que** :
- au moins une paroi latérale (23) du conteneur (C) est formée par des portes articulées (23a, 23b), lesquelles portes sont équipées d'un scellé numéroté (60) à usage unique empêchant l'ouverture desdites portes,
- chaque échancrure (14) est associée à un escalier (140) débouchant sur la plateforme (13), de sorte qu'en montant sur lesdits escaliers, un opérateur puisse accéder et contrôler le scellé (60).

2. Ensemble selon la revendication 1, dans lequel :
- la plateforme (13) est configurée de manière à délimiter : - un emplacement pour recevoir un unique conteneur de 20 pieds, - un emplacement pour recevoir deux conteneurs de 20 pieds accolés, - un emplacement pour recevoir un unique conteneur de 40 pieds, - un emplacement pour recevoir un unique conteneur de 45 pieds,
- les échancrures (14) sont agencées de manière à autoriser l'accès aux éléments creux inférieurs (30a) du ou des conteneurs (C) positionnés dans lesdits emplacements.

3. Ensemble selon la revendication 2, dans lequel les bords transversaux (131) de la plateforme sont montés coulissants dans ladite plateforme, entre une position repliée où ils délimitent l'emplacement pour recevoir deux conteneurs (C) de 20 pieds accolés ou l'emplacement pour recevoir un unique conteneur (C) de 40 pieds, et une position déployée où ils délimitent l'emplacement pour recevoir un unique conteneur (C) de 45 pieds.

4. Ensemble selon l'une des revendications précédentes, dans lequel des éléments (15) constitués d'un matériau souple pour absorber les chocs, les vibrations et le bruit, sont installés sur la plateforme (13).

5. Ensemble selon l'une des revendications précédentes, dans lequel les échancrures (14) ont une largeur comprise entre 1 m et 2,5 m, préférentiellement 2 m et une profondeur comprise entre 50 cm et 1 m, préférentiellement 75 cm.

6. Ensemble selon l'une des revendications précédentes, dans lequel des guides (132) sont disposés aux extrémités des parties pleines des bords longitudinaux (130) de la plateforme et sur les bords transversaux (131) de la plateforme (13).

7. Ensemble selon l'une des revendications précédentes, dans lequel un caisson (4) pour la récupération des verrous tournants est installé en dessous de la plateforme (13) d'un côté dudit engin, une rampe inclinée (40) agencée sous ladite plateforme étant associée audit caisson, ladite rampe présentant une extrémité basse (41) située au niveau dudit caisson et une extrémité haute (42) située de l'autre côté dudit engin au niveau de ladite plateforme.

8. Ensemble selon l'une des revendications précédentes, dans lequel le moteur pour déplacer l'engin motorisé est installé entre le châssis (10) et la plateforme (13).

9. Ensemble selon l'une des revendications précédentes, dans lequel le moteur pour déplacer l'engin motorisé est un moteur piloté à distance depuis un centre de commande (PC), la structure support (12) étant pourvue de capteurs (120) permettant de situer l'engin motorisé dans son environnement, lesdits capteurs étant configurés pour communiquer avec ledit centre de commande (PC).

10. Procédé pour embarquer un conteneur sur un bateau en utilisant l'ensemble conforme à la revendication 1, ledit procédé comportant successivement les étapes suivantes :
- enlever un conteneur (C) rangé dans un parc à conteneurs au moyen d'un chariot cavalier,
- positionner le chariot cavalier au dessus de l'engin motorisé et déposer le conteneur sur la plateforme (13) dudit engin,
- mettre en place les verrous tournants dans les éléments creux inférieurs (30a) du conteneur (C),
- enlever le conteneur (C) pourvu de ses verrous tournants au moyen d'un portique et le déposer sur le bateau.

11. Procédé pour débarquer un conteneur rangé dans un bateau en utilisant l'ensemble conforme à la revendication 1, ledit procédé comportant successivement les étapes suivantes :
- enlever le conteneur rangé sur un bateau au moyen d'un portique et le déposer sur la plateforme (13) de l'engin motorisé,
- enlever les verrous tournants des éléments creux inférieurs (30a) du conteneur (C),
- contrôler un scellé numéroté (60) à usage unique empêchant l'ouverture de portes (23a, 23b) du conteneur (C),
- enlever le conteneur (C) dépourvu de ses verrous tournants au moyen d'un chariot cavalier et le ranger dans un parc à conteneurs.

12. Procédé selon la revendication 11, dans lequel le portique est déplacé d'une cale de rangement à l'autre du bateau, l'engin motorisé étant déplacé de manière à suivre le déplacement dudit portique.

## Patentansprüche

1. Förderanlage für Behälter, umfassend:
- mindestens einen Behälter (C) von parallelflacher Form, umfassend eine obere Wand (21), eine untere Wand (22) und Seitenwände (23, 24, 25, 26), wobei untere hohle Elemente (30a) für die Anordnung von Drehzapfen im Bereich der Ecken der unteren Wand (22) angeordnet sind,
- ein motorisiertes Fahrzeug zum Verschieben des Behälters (C), wobei das Fahrzeug umfasst:
* ein Gestell (10), das mit Rädern (11) versehen ist,
* eine Tragstruktur (12), die mit einer Plattform (13) versehen ist, auf der der Behälter (C) angeordnet ist, wobei die Plattform Längsränder (130) und Querränder (131) umfasst,
* wobei die Plattform (13) Ausnehmungen (14) umfasst, die den Zugang zu den unteren hohlen Elementen (30a) des Behälters (C), der auf der Plattform angeordnet ist, ermöglichen, so dass ein Bediener die Drehzapfen aus den hohlen Elementen herausnehmen oder in diesen anordnen kann,
- wobei die Plattform (13) auf einer derartigen Höhe angeordnet ist, dass ein Bediener die Drehzapfen aus den unteren hohlen Elementen (30a) vom Boden aus herausnehmen oder in diesen anordnen kann,
- wobei die Plattform (13) Ausnehmungen (14) umfasst, die in Form von bogenförmigen Ausschnitten vorhanden sind, die an den Längsrändern (130) der Plattform hergestellt sind, so dass die Längsränder abwechselnd volle Teile, auf denen der Behälter (C) steht, und hohle Teile aufweist, die von den bogenförmigen Ausschnitten gebildet sind und vom Boden aus den Zugang zu den unteren hohlen Elementen (30a) des Behälters gestatten, wobei die bogenförmigen Ausschnitte derart dimensioniert sind, dass sie den Durchgang eines Bedieners ermöglichen,
**dadurch gekennzeichnet, dass**:
- mindestens eine Seitenwand (23) des Behälters (C) von gelenkigen Türen (23a, 23b) gebildet ist, wobei die Türen mit einer nummerierten Plombe (60) zur Einmalverwendung ausgestattet sind, die das Öffnen der Türen verhindert,
- wobei jeder bogenförmige Ausschnitt (14) mit einer Treppe (140) verbunden ist, die auf der Plattform (13) mündet, so dass ein Bediener, wenn er die Treppe hochsteigt, Zugang zu der Plombe (60) bekommt und diese kontrollieren kann.

2. Anlage nach Anspruch 1, bei der:
- die Plattform (13) derart konfiguriert ist, dass sie begrenzt: - eine Stelle für die Aufnahme eines einzigen Behälters von 20 Fuß, - eine Stelle für die Aufnahme von zwei verbundenen Behältern von 20 Fuß, - eine Stelle für die Aufnahme eines einzigen Behälters von 40 Fuß, - eine Stelle für die Aufnahme eines einzigen Behälters von 45 Fuß,
- die bogenförmigen Ausschnitte (14) derart angeordnet sind, dass sie den Zugang zu den unteren hohlen Elementen (30a) des oder der Behälter (C), die an den Stellen angeordnet sind, gestatten.

3. Anlage nach Anspruch 2, bei der die Querränder (131) der Plattform gleitend in der Plattform zwischen einer eingeklappten Position, in der sie die Stelle für die Aufnahme von zwei verbundenen Behältern (C) von 20 Fuß oder die Stelle für die Aufnahme eines einzigen Behälters (C) von 40 Fuß begrenzen, und einer ausgefahrenen Position montiert sind, in der sie die Stelle für die Aufnahme eines einzigen Behälters (C) von 45 Fuß begrenzen.

4. Anlage nach einem der vorhergehenden Ansprüche, bei der die Elemente (15), die aus einem elastischen Material hergestellt sind, um die Stöße, die Schwingungen und den Lärm aufzunehmen, auf der Plattform (13) installiert sind.

5. Anlage nach einem der vorhergehenden Ansprüche, bei der die bogenförmigen Ausschnitte (14) eine Breite zwischen 1 m und 2,5 m, vorzugsweise von 2 m, und eine Tiefe zwischen 50 cm und 1 m, vorzugsweise von 75 cm, aufweisen.

6. Anlage nach einem der vorhergehenden Ansprüche, bei der Führungen (132) an den Enden der vollen Teile der Längsränder (130) der Plattform und an den Querrändern (131) der Plattform (13) angeordnet sind.

7. Anlage nach einem der vorhergehenden Ansprüche, bei der ein Kasten (4) für die Aufnahme der Drehzapfen unter der Plattform (13) auf einer Seite des Fahrzeugs installiert ist, wobei eine geneigte Rampe (40), die unter der Plattform angeordnet ist, mit dem Kasten verbunden ist, wobei die Rampe ein unteres Ende (41), das sich im Bereich des Kastens befindet, und ein oberes Ende (42), das sich auf der anderen Seite des Fahrzeugs im Bereich der Plattform befindet, aufweist.

8. Anlage nach einem der vorhergehenden Ansprüche, bei der der Motor zum Verschieben des motorisierten Fahrzeugs zwischen dem Gestell (10) und der Plattform (13) installiert ist.

9. Anlage nach einem der vorhergehenden Ansprüche, bei der der Motor zum Verschieben des motorisierten Fahrzeugs ein von einem Steuerzentrum (PC) ferngesteuerter Motor ist, wobei die Tragstruktur (12) mit Sensoren (120) versehen ist, die es ermöglichen, das motorisierte Fahrzeug in seiner Umgebung anzuordnen, wobei die Sensoren derart konfiguriert sind, dass sie mit dem Steuerzentrum (PC) in Verbindung stehen.

10. Verfahren, um einen Behälter auf ein Boot unter Verwendung der Anlage nach Anspruch 1 zu laden, wobei das Verfahren nacheinander die folgenden Schritte umfasst:
- Entfernen eines Behälters (C), der an einer Behälter-Sammelstelle verstaut ist, mit Hilfe eines Portalstaplers,
- Positionieren des Portalstaplers über dem motorisierten Fahrzeug und Legen des Behälters auf die Plattform (13) des Fahrzeugs,
- Anbringen der Drehzapfen in den unteren hohlen Elementen (30a) des Behälters (C),
- Entfernen des mit seinen Drehzapfen versehenen Behälters (C) mit Hilfe eines Portalkrans und Abstellen auf dem Boot.

11. Verfahren, um einen Behälter, der in einem Boot unter Verwendung der Anlage nach Anspruch 1 verstaut ist, zu entladen, wobei das Verfahren nacheinander die folgenden Schritte umfasst:
- Entfernen des auf einem Boot verstauten Behälters mit Hilfe eines Portalkrans und Abstellen auf der Plattform (13) des motorisierten Fahrzeugs,
- Entfernen der Drehzapfen der unteren hohlen Elemente (30a) des Behälters (C),
- Kontrollieren einer nummerierten Plombe (60) zur Einmalverwendung, die das Öffnen der Türen (23a, 23b) des Behälters (C) verhindert,
- Entfernen des Behälters (C), der von seinen Drehzapfen befreit ist, mit Hilfe eines Portalstaplers und Verstauen desselben an einer Behälter-Sammelstelle.

12. Verfahren nach Anspruch 11, bei dem der Portalkran von einem Lagerkeil zum anderen des Bootes verschoben wird, wobei das motorisierte Fahrzeug derart verschoben wird, dass es der Verschiebung des Portalkrans folgt.

## Claims

1. Assembly for the handling of containers comprising:
- at least one parallelepipedal container (C) comprising an upper wall (21), a lower wall (22) and side walls (23, 24, 25, 26), lower hollow elements (30a) for installing twist locks being located at the corners of the lower wall (22),
- a motorized device for moving the container (C), said device comprising:
∘ a chassis (10) provided with wheels (11),
∘ a support structure (12) provided with a platform (13) on which is positioned the container (C), said platform comprising longitudinal edges (130) and transverse edges (131),
∘ the platform (13) comprises cutouts (14) allowing access to the lower hollow elements (30a) of the container (C) positioned on said platform, such that an operative can remove or install the twist locks in said hollow elements,
- the platform (13) is located at such a height that an operative might remove or install the twist locks in the lower hollow elements (30a) from the ground,
- the platform (13) comprises cutouts in the form of notches created on the longitudinal edges (130) of said platform, such that said longitudinal edges have, in alternation, solid portions on which the container (C) rests and hollow portions which are formed by said notches and which allow access, from the ground, to the lower hollow elements (30a) of said container, which notches are dimensioned so as to allow an operative to pass through,
**characterized in that**
- at least one side wall (23) of the container (C) is formed by articulated doors (23a, 23b), which doors are equipped with a single-use numbered seal (60) which prevents said doors from opening,
- each notch (14) is associated with a stairway (140) opening onto the platform (13) such that, by climbing said stairs, an operative might reach and inspect the seal (60).

2. Assembly according to Claim 1, in which:
- the platform (13) is configured so as to delimit: - a space for receiving a single 20-foot container, - a space for receiving two 20-foot containers end to end, - a space for receiving a single 40-foot container, - a space for receiving a single 45-foot container,
- the notches (14) are arranged so as to allow access to the lower hollow elements (30a) of the container(s) (C) positioned in said spaces.

3. Assembly according to Claim 2, in which the transverse edges (131) of the platform are mounted so as to be able to slide in said platform, between a retracted position in which they delimit the space for receiving two 20-foot containers (C) end to end or the space for receiving a single 40-foot container (C), and a deployed position in which they delimit the space for receiving a single 45-foot container (C).

4. Assembly according to one of the preceding claims, in which elements (15) made of a flexible material for absorbing shocks, vibrations and noise are installed on the platform (13).

5. Assembly according to one of the preceding claims, in which the notches (14) are between 1 m and 2.5 m wide, preferably 2 m wide, and between 50 cm and 1 m deep, preferably 75 cm deep.

6. Assembly according to one of the preceding claims, in which guides (132) are arranged at the ends of the solid portions of the longitudinal edges (130) of the platform and on the transverse edges (131) of the platform (13).

7. Assembly according to one of the preceding claims, in which a box (4) for recovering the twist locks is installed below the platform (13) on one side of said device, an inclined ramp (40) arranged below said platform being associated with said box, said ramp having a bottom end (41) located at the level of said box and a top end (42) located on the other side of said device at the level of said platform.

8. Assembly according to one of the preceding claims, in which the engine for moving the motorized device is installed between the chassis (10) and the platform (13).

9. Assembly according to one of the preceding claims, in which the engine for moving the motorized device is an engine controlled remotely from a control centre (PC), the support structure (12) being provided with sensors (120) by means of which it is possible to locate the motorized device in its surroundings, said sensors being configured in order to communicate with said control centre (PC).

10. Method for loading a container onto a ship using the assembly according to Claim 1, said method comprising, in succession, the following steps:
- removing a container (C) stored in a container park by means of a straddle carrier,
- positioning the straddle carrier above the motorized device and depositing the container on the platform (13) of said device,
- installing the twist locks in the lower hollow elements (30a) of the container (C),
- removing the container (C) provided with its twist locks by means of a gantry crane and depositing it on the ship.

11. Method for unloading a container stowed on a ship using the assembly according to Claim 1, said method comprising, in succession, the following steps:
- removing the container stowed on a ship by means of a gantry crane and depositing it on the platform (13) of the motorized device,
- removing the twist locks from the lower hollow elements (30a) of the container (C),
- inspecting a single-use numbered seal (60) preventing the doors (23a, 23b) of the container (C) from opening,
- removing the container (C), with its twist locks removed, by means of a straddle carrier and storing it in a container park.

12. Method according to Claim 11, in which the gantry crane is moved from one hold of the ship to the other, the motorized device being moved so as to follow the movement of said gantry crane.
